# EUROPÄISCHE PATENTANMELDUNG

(11) **EP 1 217 250 A2**
(43) Veröffentlichungstag der Anmeldung: **26.06.2002**
(21) Anmeldenummer: 01129152.3
(22) Anmeldetag: 08.12.2001
(51) Int. Cl.: F16F 9/46

(54) **Regelbarer Schwingungsdämpfer**

(30) Priorität: 23.12.2000 DE 10065184
(71) Anmelder: Continental Aktiengesellschaft, 30165 Hannover (DE)
(72) Erfinder: Härtel, Volker, Dr., 30159 Hannover (DE)

(57) **Zusammenfassung**

Regelbarer Schwingungsdämpfer (1) mit einem regelbaren innerhalb eines Durchlasses oder Bypass zwischen dem unteren Arbeitsraum (11) und dem oberen Arbeitsraum (10) angeordneten Dämpfungsventil (13), das in Zug- und Druckstufe eine Regelung der Dämpfungskraft ermöglicht, bei dem das regelbare Dämpfungsventil so ausgebildet ist, dass während eines Kolbenhubes in der Zug- oder in der Druckstufe eine über die Dauer des Kolbenhubes variable Durchströmung des Durchlasses über eine Veränderung des Strömungquerschnitts an mindestens einer Stelle des Durchlasses regelbar ist.

## Beschreibung

Die Erfindung betrifft einen regelbaren Schwingungsdämpfer, bestehend aus einem mit Dämpfungsflüssigkeit gefüllten Dämpferzylinder, in dem ein mit einer Kolbenstange verbundener Dämpfungskolben gleitet, der den Dämpferzylinder in zwei Arbeitsräume unterteilt und mit mindestens einem regelbaren Dämpfungsventil versehen ist, das in Zugund Druckstufe eine Regelung der Dämpfungskraft ermöglicht.

In der EP 0 651 174 A1 ist der Aufbau eines regelbaren Schwingungsdämpfers offenbart, bei dem ein zusätzliches und regelbares Dämpfungsventilsystem - hier ausgebildet als eine dem Schwingungsdämpfer benachbarte zusätzliche Ventilbaugruppe - zwischen einem Arbeitsraum und einem Druckspeicher einer Niveauregelanlage angeordnet ist, ggf. auch innerhalb eines Bypass zwischen den beiden Arbeitsräumen einen Schwingungsdämpfers, wobei letzteres jedoch lediglich erwähnt und nicht weiter ausgeführt ist.

Mit Hilfe des dort gezeigten regelbaren Dämpfungsventilsystems lassen sich in der Zugund in der Druckstufe zwar vier unterschiedliche, jedoch in ihrem Verlauf festgelegte Kennlinien für die Dämpfungskraft einstellen, sodass sich letztlich für den Schwingungsdämpfer lediglich die Möglichkeit der festen Einstellung einer mehr oder weniger ausgeprägten "Härte" der Dämpfung ergibt, die dann für den gesamten Betrieb bzw. für alle Hub- oder Dämpfungsspiele dieser Einstellung gleich ist.

Bei modernen Fahrzeugen mit elektronischer Fahrwerksregelung, wie z.B. bei solchen mit Elektronischem-Stabilitäts-Programm (ESP), Anti-Blockier-System (ABS) oder Anti-Schlupf-Regelung (ASR), allein oder in Kombination, ist aber das Einstellen einer festgelegten Kennlinie mit mehr oder weniger harter Dämpfung nur bedingt hilfreich, da bei einer schnell und bei Gefahrensituationen in Bruchteilen von Sekunden reagierenden elektronischer Fahrwerksregelung eine dazu auch angepasste variable Dämpfungsregelung mit Hilfe festgelegter und voreingestellter Kennlinien nicht realisiert werden kann.

Für die Erfindung bestand also die Aufgabe, eine für die Einbindung in elektronische Fahrwerksregelungen geeignete Dämpfungsregelung bereitzustellen, die eine Einstellung der Dämpfungskraft innerhalb von kürzesten Regelzeiten ermöglicht und darüberhinaus nicht lediglich festgelegten Voreinstellungen / Kennlinien folgt, sondern adaptiv im Rahmen der umgebenden Regeleingriffe im Fahrwerksbereich in einen umfassenden Algorithmus und eine Systematik der elektronischen Fahrwerksregelung eingebunden werden kann.

Gelöst wird diese Aufgabe zum einen durch die Merkmale des Hauptanspruchs, zum anderen durch die Merkmale des nebengeordneten Anspruchs 2. Weitergehende vorteilhafte Ausbildungen sind durch die Unteransprüche erfasst.

Hierbei ist das regelbare Dämpfungsventil innerhalb eines Durchlasses angeordnet, der zwischen dem unteren, unterhalb des Dämpfungskolbens sich befindlichen Arbeitsraum und dem oberen, oberhalb des Dämpfungskolbens sich befindlichen Arbeitsraum vorgesehen ist. Das regelbare Dämpfungsventil ist dabei so ausgebildet, dass während eines Kolbenhubes in der Zug- oder in der Druckstufe eine über die Dauer des Kolbenhubes variable Durchströmung des Durchlasses über eine Veränderung des Strömungquerschnitts an mindestens einer Stelle des Durchlasses regelbar ist

Eine im Sinne der Erfindung einheitliche, jedoch alternative Lösung für einen regelbaren Schwingungsdämpfer, in dem ein mit einer Kolbenstange verbundener, mit druckabhängigen Ventilen für die Zug- und Druckstufe versehener Dämpfungskolben gleitet, besteht darin, dass ein solcher Schwingungsdämpfer mit einem zusätzlichen Regelventil /regelbaren Dämpfungsventil versehen ist, das in Verbindung mit den druckabhängigen Ventilen am Dämpfungskolben des Schwingungsdämpfers in Zug- und Druckstufe eine Regelung der Dämpfungskraft ermöglicht, wobei das Regelventil innerhalb eines Bypass angeordnet ist, der zwischen dem unteren, unterhalb des Dämpfungskolbens sich befindlichen Arbeitsraum und dem oberen, oberhalb des Dämpfungskolbens sich befindlichen Arbeitsraum vorgesehen ist, wobei das Regelventil so ausgebildet ist, dass während eines Kolbenhubes in der Zug- oder in der Druckstufe eine über die Dauer des Kolbenhubes variable Durchströmung des Bypass über eine Veränderung des Strömungsquerschnitts an mindestens einer Stelle des Bypass regelbar ist

Durch die erfindungsgemässe Ausbildung eines regelbaren Dämpfungsventiles /Regelventiles wird es möglich, kürzeste Regelzeiten und zu erreichen und die Regelung der Dämpfungskraft des Schwingungsdämpfers in die übrige elektronische Fahrwerksregelung zu integrieren. So lässt sich etwa bei einer Notbremsung eines Kraftfahrzeuges die durch die Achslastverschiebung, d.h. die durch die verstärkte Belastung der Vorderräder und das damit verstärkte Einfedern der Vorderachse entstehende Nickbewegung beeinflussen durch eine während der Dauer des dortigen Hubes des Dämpferkolbens in der Druckstufe - insbesondere in der Anfangsphase - zunehmend verkleinerte Durchströmung des Bypass und die damit während des Kolbenhubes zunehmend härtere Dämpfung. Zusätzlich kann eine entsprechend gleichzeitig zunehmend weichere Dämpfungsregelung an der Hinterachse erfolgen.

In ähnlicher Weise lässt sich die durch eine Radlastverschiebung bei plötzlichen Lenk- und Ausweichmanövern auftretende Wankbewegung beeinflussen, dann durch entsprechend unterschiedliche Dämpfungsregelung bei den kurveninneren und kurvenäusseren Rädern. Gleiches gilt für die Beeinflussung von Gierbewegungen, d.h. bei Bewegungen des Fahrzeuges um seine Hochachse. Geschieht all dies im Rahmen einer Kombination z. B. mit einem geregelten Bremseingriff einzelner Räder bei einer elektronischen Fahrwerksregelung, ergibt sich durch eine solche Dämpfungsregelung eine erhebliche Verbesserung der Fahrstabilität insbesondere in extremen Fahrsituationen.

Eine vorteilhafte Ausbildung der Erfindung besteht darin, dass an mindestens einer Stelle des Durchlasses oder Bypass ein über Stelleinrichtungen bewegbarer und dadurch den Strömungsquerschnitt verändernder Ventilkörper innerhalb des Durchlasses oder Bypass angeordnet ist, insbesondere über als elektromagnetisch oder elektrodynamisch wirkende Einrichtungen ausgebildete Stelleinrichtungen, die ausgehend von einer durch Speichenenergie, insbesondere durch Federbelastung fixierten Ruhelage des Ventilkörpers die relative Lage des Ventilkörpers innerhalb des Durchlasses oder Bypass beeinflussen

Hierbei läßt sich ein Ventilkörper, wie beispielsweise eine im Folgenden noch beschriebene metallische Hülse, auf einfache Weise entweder durch einen in der Kolbenstange eingelassenen Elektromagneten gegen Federkraft bewegen oder aber mit Hilfe einer in der Hülse angeordneten Spule innerhalb eines Magnetfeldes (Tauchspulenprinzip). Dabei kann das Magnetfeld in an sich bekannter Weise etwa durch einen Permanentmagneten oder auch durch eine von Gleichstrom durchflossene zweite Spule erzeugt werden. Alle hierzu nötigen Kabelzuführungen lassen sich ohne besonderen Aufwand in der Kolbenstange verlegen.

Eine weitere vorteilhafte Ausbildung besteht darin, dass der Ventilkörper durch die Stelleinrichtungen translatorisch in Richtung der Kolbenstangenachse bewegbar ist, wodurch eine fertigungstechnisch sehr einfache Lösung zur Bereitstellung der Ventilfunktion entsteht. Ebenfalls vorteilhaft im Hinblick auf eine zur Bereitstellung des geregelten Volumenstrom bei der Durchströmung des Bypass nur minimale und damit schnelle Bewegung des als Hülse ausgebildeten Ventilkörpers ist eine weitere Ausbildung, bei der der Ventilkörper durch die Stelleinrichtungen rotatorisch um. die Kolbenstangenachse bewegbar ist. Auch eine Kombination dieser beiden Bewegungsarten, nämlich eine schraubenlinienförmige Bewegung des Ventilkörpers ist selbstverständlich möglich, erfordert aber eine Führung und damit zusätzlich Bearbeitungschritte bzw. bearbeitete Teile.

In einer weiteren vorteilhaften Ausbildung sind innerhalb des Schwingungsdämpfers, beispielweise innerhalb der Kolbenstange oder des Kolbens Sensoren vorgesehen, die die augenblickliche Position des Ventilkörpers im Durchlass oder Bypass erfassen und als verarbeitbares Signal in einen Regelkreis rückführen. Eine solche Positionserkennung erlaubt eine weiter präzisierte Regelung über verfeinerte Regelalgorithmen.

Eine vorteilhafte Ausbildung der Erfindung, bei der das Regelventil innerhalb des Stossdämpfers integriert werden kann und demzufolge kein zusätzlicher Einbauraum vorzusehen ist, besteht darin, dass die Kolbenstange mindestens in ihrem unteren Bereich hohl und zum unterhalb des Dämpfungskolbens sich befindlichen unteren Arbeitsraum des Dämpferzylinders offen ausgebildet ist und oberhalb des Dämpfungskolbens mit ersten Öffnungen / Bohrungen zur Verbindung des oberen Arbeitsraumes mit dem Kolbenstangenhohlraum versehen ist, wobei das Regelventil aus einem innerhalb des Kolbenstangenhohlraumes über Stelleinrichtungen beweglichen, ggf. mit zweiten Öffnungen / Bohrungen in ihren Wänden versehene Hülse ausgebildeten Ventilkörper besteht, wobei die Hülse bzw. die zweiten Öffnungen in den Wänden der Hülse und die ersten Öffnungen in der hohlen Kolbenstange so angeordnet sind, dass durch eine über die Stelleinrichtungen erfolgende Bewegung der Hülse relativ zur Kolbenstange der Durchströmungsquerschnitt der ersten Öffnungen zur Bereitstellung eines Bypass veränderbar ist, bzw. die ersten Öffnungen und die zweiten Öffnungen sich mindestens teilweise zur Bereitstellung eines Bypass überdecken, wobei die Stelleinrichtungen, der als Hülse ausgebildete Ventilkörper, und die Geometrie der ersten und zweiten Bohrungen so ausgebildet sind, dass während eines Kolbenhubes in der Zug- oder in der Druckstufe eine über die Dauer des Kolbenhubes variable Durchströmung des Bypass über eine Veränderung des Strömungquerschnitts des Bypass im Bereich der Öffnungen regelbar ist.

Damit ergeben sich sehr einfache konstruktive Ausbildungen, bei denen einerseits entweder die in der hohlen Kolbenstange ausgebildeten Bohrungen direkt durch die Hülsenbewegung geöffnet oder geschlossen werden können, oder andererseits Öffnungen sowohl in der Kolbenstange als auch in der Hülse vorhanden sein können, die zur Durchströmung mehr oder weniger zur Überdeckung gebracht werden. Selbstverständlich können auch beide Konstruktionsarten nebeneinander ausgeführt sein, sodass mehrere "erste" Öffnungen auf unterschiedlichen Höhenpositionen der hohlen Kolbenstange vorhanden sind, von denen einige durch den Hülsenkörper als solchen geöffnet oder geschlossen werden können, andere durch Überdeckung mit "zweiten" Öffnungen im Hülsenkörper.

In einer solchen Ausbildung, bei der der Ventilkörper aus einer beweglichen Hülse besteht, und insbesondere unter Verwendung des oben genannten Tauchspulenprinzips ist beispielsweise auch die Konstruktion einen Regelventils möglich, bei dem in seiner Ruhelage die ersten Öffnungen durch die Hülse nicht vollständig geschlossen werden, bzw. die ersten Öffnungen und die zweiten Öffnungen sich zur Bereitstellung eines permanenten Bypass in einem für die "Normalfunktion" des Schwingungsdämpfers ausgelegten Maß überdecken und so einen definierten definierten Volumenstrom durch den Bypass erlauben. Entsprechend sind natürlich hierzu die übrigen Durchströmungsbohrungen und die Ventilfederscheiben des Dämpfungskolbens auszulegen, soweit vorhanden. Sobald bei einer extremen Fahrsituation dann zu Anfang eines Kolbenhubes z.B. eine sehr harte Dämpfung eingestellt und danach wieder eine variable weichere Dämpfung während des Kolbenspiels erforderlich werden soll, kann der als Hülse ausgebildete Ventilkörper zunächst in eine Stellung bewegt werden, bei der die ersten Öffnungen geschlossen werden, bzw. bei der keinerlei Überdeckung der ersten Öffnungen und zweiten Öffnungen mehr vorhanden und der Bypass somit geschlossen ist (härteste Dämpfung). Danach kann im Verlauf und während der Dauer des Kolbenhubes wieder eine - ggf. im Vergleich zum Ruhezustand größere und sich verändernde - Öffnung eingestellt werden, die dann eine variable weichere Dämpfung erlaubt. Neben einem "Tauchspulenprinzip" sind hier natürlich auch andere geeignete Betätigungsmechanismen nutzbar.

Im Übrigen kann die Betätigung / Bewegung des Ventilkörpers auch über z. B. einen innerhalb der Kolbenstange befindlichen Stössel oder sonstige mechanische Übertragungsglieder erfolgen, wobei dann auch die sonstigen Stelleinrichtungen ausserhalb des Kolbenbereiches, ausserhalb der Kolbenstange, oder auch ausserhalb des Schwingungsdämpfers angeordnet sein können.

Neben der dargestellten Anordnung des als Hülse ausgebildeten Ventilkörpers innerhalb der hohlen Kolbenstange ist selbstverständlich auch jede andere "Hülsenanordnung" denkbar, beispielweise eine, bei der die Hülse die Kolbenstange umgreift oder eine, bei der die Hülse als Teil des Kolbens ausgebildet ist.

Eine weitere vorteilhafte Ausbildung besteht darin, dass die Geometrien der ersten und zweiten Öffnungen so ausgebildet sind, dass bei zunehmender Überdeckung der Öffnungen ein nicht-linear verlaufender, insbesondere exponentiell verlaufender Volumenstrom für die Durchströmung des Bypass einstellbar ist. Beispielsweise können die Öffnungen dreieckig oder kurvenförmig ausgebildet sein, wodurch z.B. zu Anfang oder zu Ende der Überdeckung der Volumenstrom durch den Bypass überproportional steigt oder sinkt und die oben genannten Regelvorgänge beim Bremsen oder bei Kurvenfahrten noch besser ausgelegt werden können.

Eine weitere vorteilhafte Ausbildung besteht darin, dass der Ventilkörper im Wesentlichen aus Kunststoff, insbesondere aus mit Verstärkungsmaterialien, wie etwa Kohlefasern oder Glasfasern versehenem Kunststoff besteht. Die geringe Masse eines solchen Ventilkörpers erleichtert schnelle Stellbewegungen, die in Extremsituationen nötig sind. Ein für die Bewegung eines solchen Ventilkörpers nötiger Aktuator kann dann ohne Probleme beispielweise in die Kunststoffmatrix eingebettet werden.

Wie bereits umfassend dargestellt, lässt sich ein solcher regelbarer Schwingungsdämpfers in besonders vorteilhafter Weise innerhalb einer elektronischen Fahrwerksregelung eines Kraftfahrzeuges verwenden, wobei die Regeleinrichtung zur Regelung des Schwingungsdämpfers mit weiteren Regeleinrichtungen, insbesondere solchen eines Elektronischen-Stabilitäts-Programms (ESP), eines Anti-Blockier-Systems (ABS) oder einer Anti-Schlupf-Regelung (ASR) gekoppelt ist.

Anhand eines Ausführungsbeispieles soll die Erfindung näher erläutert werden.

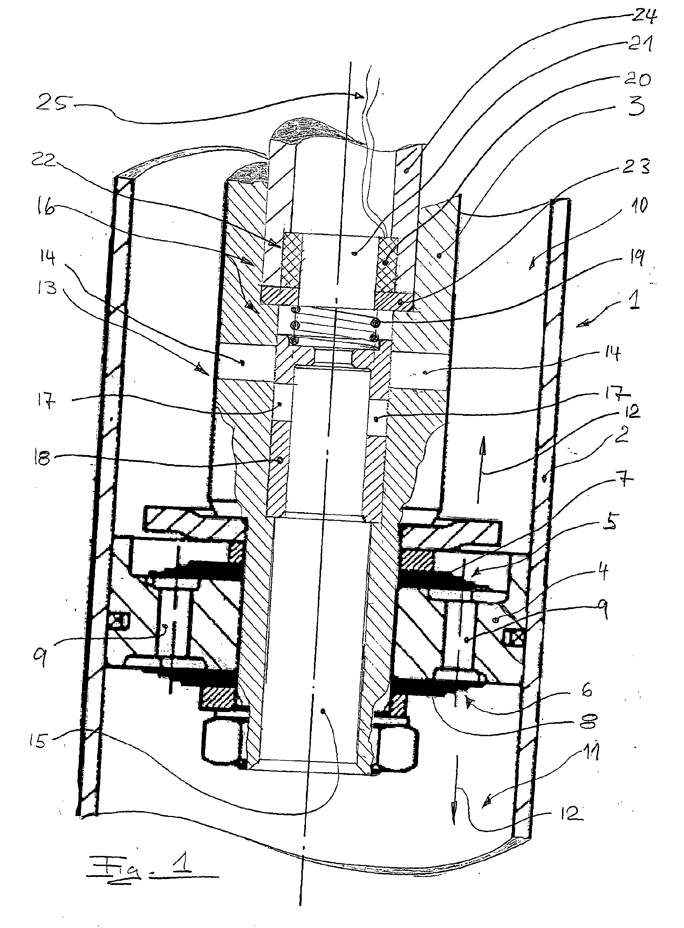

Die Fig. 1 zeigt einen Abschnitt eines regelbaren Schwingungsdämpfers 1, bestehend aus einem mit Dämpfungsflüssigkeit gefüllten Dämpferzylinder 2, in dem ein mit einer Kolbenstange 3 verbundener Dämpfungskolben 4 gleitet.

Der Dämpfungskolben ist mit druckabhängigen Ventilen 5 und 6 für die Zug- und Druckstufe versehen, die im Wesentlichen aus einem Paket von Ventilfedertellern 7 und 8 bestehen, die auf entsprechenden Durchgangsbohrungen 9 des Dämpfungskolbens 4 aufliegen und beim Kolbenhub je nach Durchstömungsrichtung öffnen.

Der Dämpfungskolben unterteilt den Dämpferzylinder in zwei Arbeitsräume, nämlich in einen oberen Arbeitsraum 10 und in einen unteren Arbeitsraum 11.

Der Dämpfungskolben 4 in Verbindung mit der Kolbenstange 3 ist mit einem zusätzlichen Regelventil 13 versehen ist, das in Verbindung mit den druckabhängigen Ventilen 5 und 6 am Dämpfungskolben 4 des Schwingungsdämpfers in Zug- und Druckstufe eine Regelung der Dämpfungskraft ermöglicht (in der Zugstufe erfolgt bei diesem Ausführungsbeispiel ein Kolbenhub 12 nach oben, in der Druckstufe nach unten).

Zur Bereitstellung des Regelventils 13 ist dabei zunächst die Kolbenstange 3 hohl und zum unterhalb des Dämpfungskolbens 4 sich befindlichen Arbeitsraum 11 offen ausgebildet und ist weiterhin oberhalb des Dämpfungskolbens mit ersten Öffnungen 14 zur Verbindung des oberen Arbeitsraumes 10 mit dem Kolbenstangenhohlraum 15 versehen. Darüberhinaus besteht das Regelventil aus einem innerhalb des Kolbenstangenhohlraumes 15 über Stelleinrichtungen 16 beweglichen Ventilkörper, der als mit zweiten Öffnungen 17 in ihren Wänden versehene Hülse 18 ausgebildet ist.

Die zweiten Öffnungen 17 in den Wänden der Hülse und die ersten Öffnungen 14 in der hohlen Kolbenstange sind so angeordnet sind, dass durch eine über die Stelleinrichtungen erfolgende translatorische Bewegung der Hülse 18 relativ zur Kolbenstange nach oben die ersten Öffnungen und die zweiten Öffnungen sich mindestens teilweise zur Bereitstellung eines Bypass überdecken können, wenn die Stelleinrichtungen aktiviert werden.

In der Fig. 1 ist die an einem Absatz der hohlen Kolbenstange fixierte Ruhestellung des Ventilkörpers (Hülse 18) gezeigt, die durch eine Schraubenfeder 19 gesichert wird.

Als Stelleinrichtungen wirken die Schraubenfeder 19 und der aus Spule 20 und Kern 21 bestehende Elektromagnet 22 zusammen, wobei der Elektromagnet über entsprechende Distanzhülsen 23 und 24 in der hohlen Kolbenstange 3 befestigt ist.

Sobald der über die Zuleitungen 25 angesteuerte Elektromagnet 22 betätigt wird, wird der metallische Ventilkörper (Hülse 18) relativ zur Kolbenstange oder auch zum Kolben nach oben bewegt, wobei sich die ersten und zweiten Öffnungen 14 und 17 zunehmend überdecken und einen Bypass freigeben. Die Geometrie der ersten und zweiten Öffnungen ist dabei so ausgebildet sind, dass während eines Kolbenhubes in der Zug- oder in der Druckstufe eine über die Dauer des Kolbenhubes variable Durchströmung im Bypass einstellbar ist.

### Bezugszeichenliste

### (ist Teil der Beschreibung)

- 1: Schwingungsdämpfer
- 2: Dämpferzylinder
- 3: Kolbenstange
- 4: Dämpfungskolben
- 5: Ventil
- 6: Ventil
- 7: Ventilfederteller
- 8: Ventilfederteller
- 9: Durchgangsbohrung
- 10: oberer Arbeitsraum
- 11: unterer Arbeitsraum
- 12: Kolbenhub
- 13: Regel ventil
- 14: erste Öffnungen
- 15: Kolbenstangenhohlraum
- 16: Stelleinrichtungen
- 17: zweite Öffnungen
- 18: Hülse
- 19: Schraubenfeder
- 20: Spule
- 21: Kern
- 22: Elektromagnet
- 23: Distanzhülse
- 24: Distanzhülse
- 25: Zuleitung

## Patentansprüche

1. Regelbarer Schwingungsdämpfer, bestehend aus einem mit Dämpfungsflüssigkeit gefüllten Dämpferzylinder, in dem ein mit einer Kolbenstange verbundener Dämpfungskolben gleitet, der den Dämpferzylinder in zwei Arbeitsräume unterteilt und mit mindestens einem regelbaren Dämpfungsventil versehen ist, das in Zug- und Druckstufe eine Regelung der Dämpfungskraft ermöglicht, wobei das regelbare Dämpfungsventil innerhalb eines Durchlasses angeordnet ist, der zwischen dem unteren, unterhalb des Dämpfungskolbens sich befindlichen Arbeitsraum und dem oberen, oberhalb des Dämpfungskolbens sich befindlichen Arbeitsraum vorgesehen ist und bei dem das regelbare Dämpfungsventil so ausgebildet ist, dass während eines Kolbenhubes in der Zug- oder in der Druckstufe eine über die Dauer des Kolbenhubes variable Durchströmung des Durchlasses über eine Veränderung des Strömungquerschnitts an mindestens einer Stelle des Durchlasses regelbar ist.

2. Regelbarer Schwingungsdämpfer, bestehend aus einem mit Dämpfungsflüssigkeit gefüllten Dämpferzylinder, in dem ein mit einer Kolbenstange verbundener, mit druckabhängigen Ventilen für die Zug- und Druckstufe versehener Dämpfungskolben gleitet, der den Dämpferzylinder in zwei Arbeitsräume unterteilt, und der mit einem zusätzlichen Regelventil / regelbaren Dämpfungsventil versehen ist, das in Verbindung mit den druckabhängigen Ventilen an Dämpfungskolben des Schwingungsdämpfers in Zug- und Druckstufe eine Regelung der Dämpfungskraft ermöglicht,
**dadurch gekennzeichnet,**
**dass** das Regelventil (13) innerhalb eines Bypass angeordnet ist, der zwischen dem unteren, unterhalb des Dämpfungskolbens (4) sich befindlichen Arbeitsraum (11) und dem oberen, oberhalb des Dämpfungskolbens sich befindlichen Arbeitsraum (10) vorgesehen ist, wobei das Regelventil (13) so ausgebildet ist, dass während eines Kolbenhubes in der Zug- oder in der Druckstufe eine über die Dauer des Kolbenhubes variable Durchströmung des Bypass über eine Veränderung des Strömungquerschnitts an mindestens einer Stelle des Bypass regelbar ist.

3. Regelbarer Schwingungsdämpfer nach Anspruch 1 oder 2, **dadurch gekennzeichnet, dass** an mindestens einer Stelle des Durchlasses oder Bypass ein über Stelleinrichtungen bewegbarer und dadurch den Strömungsquerschnitt verändernder Ventilkörper innerhalb des Durchlasses oder Bypass angeordnet ist, insbesondere über als elektromagnetisch oder elektrodynamisch wirkende Einrichtungen ausgebildete Stelleinrichtungen, die ausgehend von einer durch Speichenenergie, insbesondere durch Federbelastung fixierten Ruhelage des Ventilkörpers die relative Lage des Ventilkörpers innerhalb des Durchlasses oder Bypass beeinflussen.

4. Regelbarer Schwingungsdämpfer nach Anspruch 3, **dadurch gekennzeichnet, dass** der Ventilkörper durch die Stelleinrichtungen translatorisch in Richtung der Kolbenstangenachse bewegbar ist.

5. Regelbarer Schwingungsdämpfer nach Anspruch 3 oder 4, **dadurch gekennzeichnet, dass** der Ventilkörper durch die Stelleinrichtungen rotatorisch um die Kolbenstangenachse bewegbar ist.

6. Regelbarer Schwingungsdämpfer nach Anspruch 3 bis 5, **dadurch gekennzeichnet, dass** Sensoren vorgesehen sind, die die augenblickliche Position des Ventilkörpers im Durchlass oder Bypass erfassen und als verarbeitbares Signal in einen Regelkreis rückführen.

7. Regelbarer Schwingungsdämpfer nach Anspruch 2 oder 6, **dadurch gekennzeichnet, dass** die Kolbenstange (3) mindestens in ihrem unteren Bereich hohl und zum unterhalb des Dämpfungskolbens (4) sich befindlichen unteren Arbeitsraum (11) des Dämpferzylinders offen ausgebildet ist und oberhalb des Dämpfungskolbens (4) mit ersten Öffnungen / Bohrungen (14) zur Verbindung des oberen Arbeitsraumes (10) mit dem Kolbenstangenhohlraum (15) versehen ist, wobei das Regelventil (13) aus einem innerhalb des Kolbenstangenhohlraumes (15) über Stelleinrichtungen (16) beweglichen, ggf. mit zweiten Öffnungen / Bohrungen (17) in ihren Wänden versehene Hülse (18) ausgebildeten Ventilkörper besteht, wobei die Hülse bzw. die zweiten Öffnungen (17) in den Wänden der Hülse (18) und die ersten Öffnungen (14) in der hohlen Kolbenstange (3) so angeordnet sind, dass durch eine über die Stelleinrichtungen (16) erfolgende Bewegung der Hülse (18) relativ zur Kolbenstange (3) der Durchströmungsquerschnitt der ersten Öffnungen (14) zur Bereitstellung eines Bypass veränderbar ist, bzw. die ersten Öffnungen (14) und die zweiten Öffnungen (17) sich mindestens teilweise zur Bereitstellung eines Bypass überdecken, wobei die Stelleinrichtungen (16), der als Hülse (18) ausgebildete Ventilkörper, und die Geometrie der ersten und zweiten Bohrungen (14, 17) so ausgebildet sind, dass während eines Kolbenhubes in der Zug- oder in der Druckstufe eine über die Dauer des Kolbenhubes (12) variable Durchströmung des Bypass über eine Veränderung des Strömungquerschnitts des Bypass im Bereich der Öffnungen regelbar ist.

8. Regelbarer Schwingungsdämpfer nach Anspruch 2 bis 7, **dadurch gekennzeichnet, dass** die Geometrien der ersten und zweiten Öffnungen so ausgebildet sind, dass bei zunehmender Überdeckung der Öffnungen ein nicht-linear verlaufender, insbesondere exponentiell verlaufender Volumenstrom für die Durchströmung des Bypass einstellbar ist.

9. Regelbarer Schwingungsdämpfer nach Anspruch 3 bis 8, **dadurch gekennzeichnet, dass** der Ventilkörper im Wesentlichen aus Kunststoff, insbesondere aus mit Verstärkungsmaterialien versehenem Kunststoff besteht.

10. Verwendung eines regelbaren Schwingungsdämpfers nach Anspruch 1 bis 9 innerhalb einer elektronischen Fahrwerksregelung eines Kraftfahrzeuges, wobei die Regeleinrichtung zur Regelung des Schwingungsdämpfers mit weiteren Regeleinrichtungen, insbesondere solchen eines Elektronischen-Stabilitäts-Programms (ESP), eines Anti-Blockier-Systems (ABS) oder einer Anti-Schlupf-Regelung (ASR) gekoppelt ist.
